# EUROPEAN PATENT APPLICATION

(11) **EP 2 287 034 A2**
(43) Date of publication of application: **23.02.2011**
(21) Application number: 10173437.4
(22) Date of filing: 19.08.2010
(51) Int. Cl.: B60N 2/02

(54) **Seat apparatus for vehicle**

(30) Priority: 21.08.2009 JP 2009192571
(71) Applicant: AISIN SEIKI KABUSHIKI KAISHA, Kariya-shi, Aichi-ken 448-8650 (JP)
(72) Inventor: Maeda, Misato, Kariya-shi, Aichi-ken 448-8650 (JP); Kashiwabara, Kazuyuki, Kariya-shi, Aichi-ken 448-8650 (JP)
(74) Representative: Intès, Didier Gérard André

(57) **Abstract**

A seat apparatus for a vehicle (10) includes a seat for a vehicle (20), a seat driving portion (4) driving the seat (20) to change a seat position, a controlling portion (1) controlling an operation of the seat driving portion (4) to change the seat position to a predetermined position, and an input portion (2) receiving a control command relative to the controlling portion (1). The controlling portion (1) includes an assembly control mode in which an operation of the seat driving portion (4) is controlled on a basis of the control command input to the input portion (2) by an assembly input operation performed when the vehicle is assembled and includes a normal control mode in which the operation of the seat driving portion (4) is controlled on a basis of the control command input to the input portion (2) by a normal input operation performed when the vehicle is used by a user.

## Description

### TECHNICAL FIELD

This disclosure relates to a seat apparatus for a vehicle.

### BACKGROUND DISCUSSION

A known seat apparatus for a vehicle includes a seat for a vehicle (i.e., a seat), a seat driving portion driving the seat to change a seat position that is a position of the seat relative to a vehicle body, a controlling portion controlling an operation of the seat driving portion so as to change the seat position to a predetermined position, and an input portion receiving a control command relative to the controlling portion.

According to the aforementioned seat apparatus, the input portion receiving the control command relative to the controlling portion includes a storing switch that receives a control command to change the seat position from a usable position where the seat is in a usable state to a stored position where the seat is in a stored state. A series of seat position changing operations in which the seat position is changed from the usable position to the stored position is achieved by the input of the control command, specifically, by a continuous pressing of the storing switch by a user of the vehicle, for safety reasons. Such a seat apparatus is disclosed in JP2004-249962A. In a case where the user changes the seat position from the usable position to the stored position, the user is constrained by having to continuously pressing the storing switch until the series of seat position changing operations is completed.

According to the aforementioned seat apparatus disclosed in JP2004-249962A, in a case where an operator who is assembling the vehicle desires to check whether the seat position is normally or correctly changed from the usable position to the stored position, for example, he/she needs to keep pressing the storing switch, in the same way as the user of the vehicle, until the series of seat position changing operations is completed. That is, according to the aforementioned known seat apparatus, the input of the control command to the input portion by the operator who is assembling the vehicle and the input of the control command to the input portion by the user of the vehicle are the same. Thus, in a case where the operator desires to change the seat position to a predetermined position while assembling the vehicle, he/she is constrained by having to continuously pressing the storing switch until the series of position changing operations is completed, in the same way as the user of the vehicle.

A need thus exists for a seat apparatus for a vehicle in which a seat position change is effectively performed during an assembly of the vehicle.

### SUMMARY

According to an aspect of this disclosure, a seat apparatus for a vehicle includes a seat for a vehicle, a seat driving portion driving the seat to change a seat position that is a position of the seat relative to a vehicle body, a controlling portion controlling an operation of the seat driving portion to change the seat position to a predetermined position, and an input portion receiving a control command relative to the controlling portion. The controlling portion includes an assembly control mode in which an operation of the seat driving portion is controlled on a basis of the control command input to the input portion by an assembly input operation performed when the vehicle is assembled and includes a normal control mode in which the operation of the seat driving portion is controlled on a basis of the control command input to the input portion by a normal input operation performed when the vehicle is used by a user.

According to the aforementioned disclosure, the control command is input to the input portion by the assembly input operation that is performed when the vehicle is assembled, thereby controlling the operation of the seat driving portion in response to the aforementioned control command in the assembly control mode. In addition, the control command is input to the input portion by the normal input operation that is performed when the vehicle is used by the user thereof, thereby controlling the operation of the seat driving portion in response to the aforementioned control command in the normal control mode. Therefore, at a time of the vehicle assembly, the operation of the seat driving portion is controlled in the assembly control mode in response to the control command, not by the same input operation as that of the control command relative to the input portion at a time when the vehicle is used by the user. The position of the seat is effectively changeable at the time of the vehicle assembly.

Advantageously, the assembly input operation is an operation to initiate a change of the seat position and the normal input operation is a continuous operation continued until the seat position is changed to the predetermined position.

Accordingly, the seat position is effectively changed by the operation of the input portion for a shorter period of time when the vehicle is assembled, compared to a time period required for the operation of the input portion so as to change the seat position when the is used by the user.

Advantageously, the predetermined position in the assembly control mode is specified in an arbitrary manner.

Accordingly, the position of the seat is effectively changed to an arbitrary position at the time of the vehicle assembly.

Advantageously, at least one of a shifting from the normal control mode to the assembly control mode and a shifting from the assembly control mode to the normal control mode is achieved by at least one of a combination of the number of operation times and a combination of operation time periods relative to the input portion.

Advantageously, the shifting from the normal control mode to the assembly control mode and/or the shifting from the assembly control mode to the normal control mode is achieved by at least one of the combination of the number of operation times and the combination of operation time periods relative to the input portion. Specifically, in a case where the shifting from the normal control mode to the assembly control mode is obtained in the aforementioned manner, the assembly input operation is prevented from being conducted by the user using the vehicle.

Advantageously, the input portion includes a plurality of input operation members corresponding to a plurality of control commands of which resulting seat positions are different from each other and at least one of a shifting from the normal control mode to the assembly control mode and a shifting from the assembly control mode to the normal control mode is achieved by a combination of operations of the respective input operation members.

Accordingly, the shifting from the normal control mode to the assembly control mode and/or the shifting from the assembly control mode to the normal control mode is achieved by the combination of operations of the respective input operation members. Specifically, in a case where the shifting from the normal control mode to the assembly control mode is obtained in the aforementioned manner, the assembly input operation is prevented from being conducted by the user using the vehicle.

Advantageously, a shifting from the assembly control mode to the normal control mode is automatically performed when an operation in the assembly control mode is completed.

Accordingly, the assembly control mode is automatically shifted to the normal control mode upon completion of the operation in the assembly control mode, without the shifting operation from the assembly control mode to the normal control mode.

### DESCRIPTION OF THE DRAWINGS

The foregoing and additional features and characteristics of this disclosure will become more apparent from the following detailed description considered with the reference to the accompanying drawings, wherein:

Fig. 1 is a side view of a seat for a vehicle according to first to sixth embodiments disclosed here;

Fig. 2A is a perspective view of the left and right seats viewed from a luggage compartment and Fig. 2B is a diagram illustrating two operation switches for the left and right seats;

Figs. 3A and 3B are explanatory views of an example of a stored state of the seat;

Figs. 4A, 4B, 4C and 4D are explanatory views of another example of the stored state of the seat;

Fig. 5 is a block diagram illustrating a structure of the seat apparatus;

Fig. 6 is an explanatory view defining a seat position of the seat;

Fig 7 is a timing chart of a control operation in a normal control mode; and

Fig. 8 is a timing chart of the control operation in an assembly control mode.

### DETAILED DESCRIPTION

Embodiments disclosed here will be explained with reference to the attached drawings. In the embodiments, directions and orientations such as left, right, front, rear, top, and bottom correspond to those when viewed from a seat occupant seated on a seat for a vehicle.

### [First Embodiment]

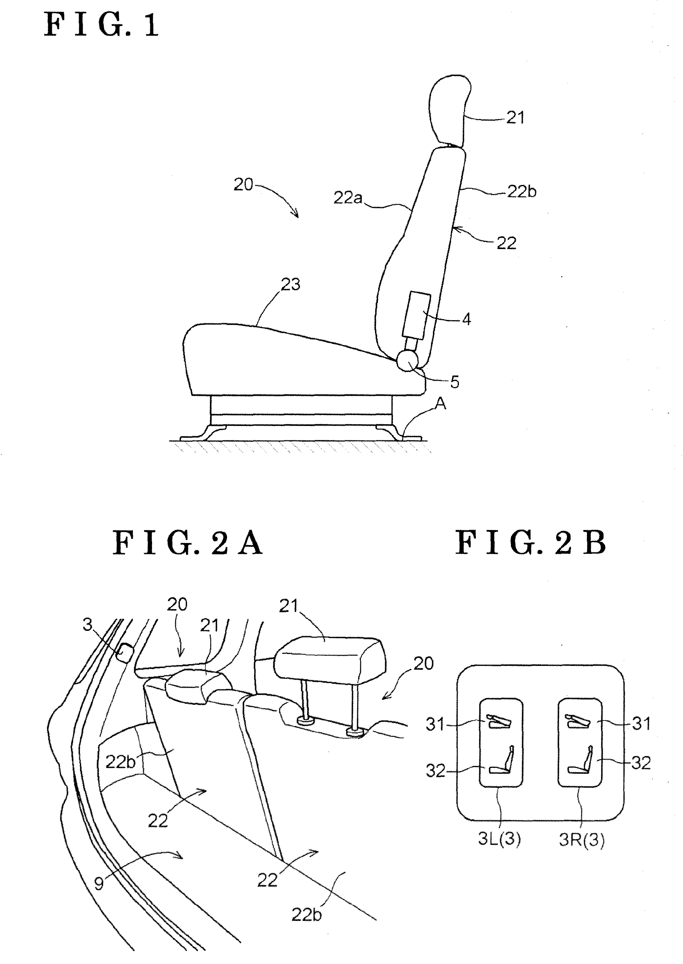

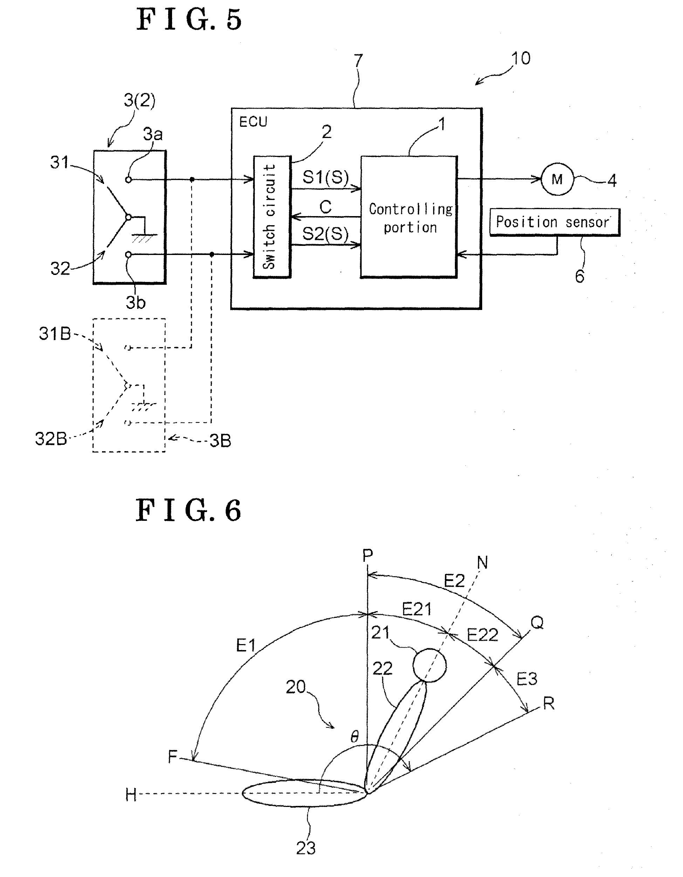

As illustrated in Figs. 1 and 5, a seat apparatus for a vehicle 10 includes a seat for a vehicle 20 (hereinafter simply referred to as a seat 20), an actuator 4, a controlling portion 1, and a switch circuit 2. The actuator 4 serves as a seat driving portion driving the seat 20 so as to change a seat position that is a position of the seat 20 relative to a vehicle body A. The controlling portion 1 controls an operation of the actuator 4 so as to change the seat position to a predetermined position. The switch circuit 2 serves as an input portion receiving a control command relative to the controlling portion 1.

As illustrated in Fig. 1, the seat 20 includes a headrest 21, a seat back 22, and a seat cushion 23. The headrest 21 is a member to support the head of a seat occupant seated on the seat 20. The seat back 22 is a back portion inducing a support surface 22a that supports the back of the seat occupant. The seat cushion 23 is a seating portion supporting the buttocks of the seat occupant. As illustrated in Fig. 2A, an opposite surface (i.e., a back surface 22b) of the support surface 22a of the seat back 22 constituting each of the left and right seats 20 faces a luggage compartment 9. That is, each of the left and right seats 20 in Fig. 2A is arranged in the most rearward direction within the vehicle so that the back surface 22b of the seat back 22 forms a portion of a wall surface of the luggage compartment 9 of the vehicle. The seat 20 corresponds to a second-row seat in a case of a vehicle having two-row seats or to a third-row seat in a case of a vehicle having three-row seats.

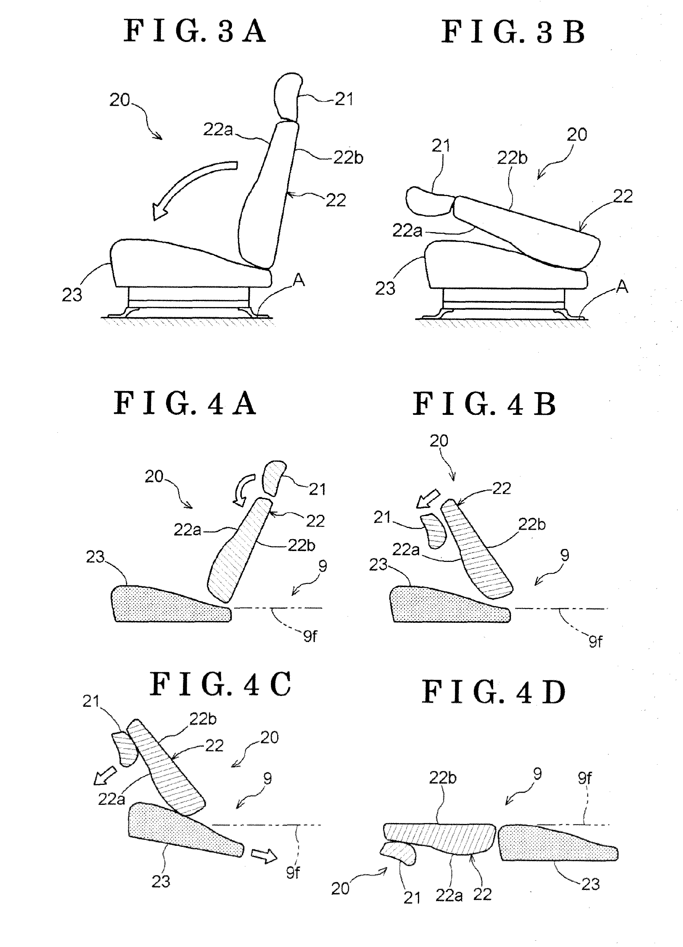

The position of the seat 20 is changeable between a usable position where the seat 20 is in a usable state so that a passenger of the vehicle may be able to be seated on the seat 20, for example, and a stored position where the seat 20 is in a stored state. The position of the seat 20 is changed to the stored position to thereby expand a space of the luggage compartment 9, which results in an increase of a storage capacity. The stored position includes various patterns. In the general stored position, the seat back 22 is folded towards the seat cushion 23 so that the support surface 22a of the seat back 22 faces the seat cushion 23 as illustrated in Figs. 3A and 3B. In addition, as illustrated in Figs. 4A, 4B, 4C and 4D, it is also possible to arrange the seat cushion 23 under a floor 9f of the luggage compartment 9, and the seat back 22 is inclined and folded to be arranged at a position where the seat cushion 23 is normally arranged in the usable position. Because the seat back 22 is arranged substantially upward in the usable position, the seat back 22 needs to be tilted and folded so as to increase the luggage compartment 9. Thus, regardless of how to store the seat 20, the seat back 22 is folded substantially horizontally in a fully stored position.

According to the present embodiment, the seat 20 is an electrically driven seat which includes various types. The headrest 21, the seat back 22, the seat cushion 23, and the entire seat 20 are known to be individually driven by an actuator such as an electric motor. The position where the seat back 22 is simply folded upon the seat cushion 23 as illustrated in Figs. 3A and 3B will be explained as an example of the stored position of the seat 20.

The controlling portion 1 and the switch circuit 2 serve as a functional portion of an ECU (electronic control unit) 7 including a logic circuit and a microcomputer as a center core in addition to the other electronic circuits. Such functional portion is not limited to be configured by hardware and may be configured by both hardware and software (program). The switch circuit 2 includes an operation switch 3.

The actuator 4 is an electric motor that drives an operation mechanism 5 to thereby drive and rotate (move) the seat back 22 for changing the seat position. The actuator 4 may include a mechanism for converting a linear movement to a rotational movement, such as a rack and a pinion, or the operation mechanism 5 may include such mechanism. The actuator 4 is not limited to the electric motor and may be a solenoid. The actuator 4 includes a position sensor 6 for detecting a physical change of the electric motor or the solenoid. For example, in a case where the actuator 4 is the electric motor, the position sensor 6 is formed by a rotational sensor using a Hall IC, and the like to detect revolutions of the electric motor. The revolutions of the rotational sensor are converted to an amount of movement (i.e., a moving angle, a position change amount, and the like) of the seat back 22 by the controlling portion 1. Alternatively, instead of the aforementioned structure, a sensor for detecting the position and the like of the seat back 22 may be provided.

The switch circuit 2 generates a control command signal S, which will be then input to the controlling portion 1, when a user of the vehicle or an operator assembling the vehicle performs an input operation of the control command via the operation switch 3. The control command signal S is a switch signal that changes the position of the seat back 22 between the stored position and the usable position. The operation switch 3 includes a storing switch 31 and a return switch 32. According to the present embodiment, the operation switch 3 is constituted by a seesaw switch. The storing switch 31 is achieved when one end of the seesaw switch makes contact with a first contact point 3a and the return switch 32 is achieved when the other end of the seesaw switch makes contact with a second contact point 3b. Because the operation switch 3 is constituted by the seesaw switch, both the storing switch 31 and the return switch 32 are prevented from being operated at the same time. In Fig. 2A, in order to achieve the storing and return of the left and right seats 20 individually, which are evenly arranged in a width direction (a left and right direction) of the vehicle, two operation switches 3L and 3R are provided according to the present embodiment as illustrated in Fig. 2B. Because operations of both the left and right seats 20 are the same, the seat position change of only one of the seats 20 will be explained below.

In a case where the switch circuit 2 receives the control command by an assembly input operation in an assembly control mode performed by an operator who is assembling the vehicle, or receives the control command by a normal input operation in a normal control mode by a user of the vehicle, the switch circuit 2 generates the control command signal S that is then transmitted to the controlling portion 1. That is, when the switch circuit 2 receives the control command for storing the seat 20 by the operation of the storing switch 31, which is obtained by the assembly input operation in the assembly control mode by the operator assembling the vehicle, or by the operation of the storing switch 31, which is obtained by the normal input operation in the normal control mode by the user of the vehicle, the switch circuit 2 generates the control command signal S for storing the seat 20 (i.e., a storing command signal S1), which is then sent to the controlling portion 1. In addition, when the switch circuit 2 receives the control command for returning the seat 20 by the operation of the return switch 32 that is obtained by the assembly input operation in the assembly control mode by the operator, or by the operation of the return switch 32 that is obtained by the normal input operation in the normal control mode by the user of the vehicle, the switch circuit 2 generates the control command signal S for returning the seat 20 (i.e., a return command signal S2), which is then sent to the controlling portion 1.

Therefore, the switch circuit 2 includes the storing switch 31 and the return switch 32 serving as multiple input operation members that correspond to the multiple control commands, i.e., the control command for storing the seat 20 and the control command for returning the seat 20, of which the resulting seat positions (i.e., after the change) are different from each other.

The returning of the seat 20 corresponds to the position change of the seat 20 from the stored position to the usable position. Thus, the returning of the seat 20 includes the position change thereof from the stored position to a reference usable position, which will be explained later, and the position change from the reference usable position to a standard use position, which will be explained later. In the same way, the storing of the seat 20 includes the position change thereof from the usable position to the reference usable position and the position change from the reference usable position to a fully stored position, which will be explained later. At this time, the reference usable position may be included in both the stored position and the usable position of the seat 20. Details of the reference usable position in addition to the standard use position and the complete stored position will be explained later.

The operation switch 3 may be arranged at multiple portions. For example, the storing switch 31 and the return switch 32 may be provided at a side of the seat 20 (i.e., a left or right side of the seat 20) together with a reclining switch of the seat back 22 which is usable by the seat occupant. An operation switch 3B (a storing switch 31B and a return switch 32B) illustrated by a dashed line in Fig. 5 is an example of such operation switch arranged at multiple portions. In Fig. 5, the reclining switch is omitted. The storing switches 31 and 31B are in a wired-OR connection. The input operation of either one of the storing switches 31 and 31B generates the storing command signal S1. The relationship between the return switches 32 and 32B is the same as that of the storing switches 31 and 31B.

The controlling portion 1 may include a driver circuit, a power supply converter circuit (for example, an inverter circuit), and the like when necessary for driving the actuator 4. The controlling portion 1 controls an operation of the actuator 4 based on the control command signal S generated by the switch circuit 2. The controlling portion 1 stops driving the actuator 4 in the reference usable position even when the controlling portion 1 receives the control command signal S, in a case where the seat back 22 passes through the reference usable position where the seat occupant is able to be seated on the seat 20 and the space of the luggage compartment 9 is at a maximum while the position of the seat back 22 is being changed.

The position of the seat back 22 relative to a center line of the seat back 22 in a side view will be defined with reference to Fig. 6. In Fig. 6, a horizontal reference H is specified to be zero degrees (0°). An angle θ relative to the horizontal reference H in a direction where the seat back 22 is tilting rearward is specified to be an angle of the seat back 22 as illustrated in Fig. 6. According to the present embodiment, the horizontal reference H is substantially in parallel to the seat cushion 23. A neutral position N indicates the position of the seat back 22 obtained when the seat occupant is normally seated on the seat 20. In a case where the seat back 22 is in the neutral position N, the seat 20 is defined to be in a standard use position. A range E21 defined in a forward tilting direction of the neutral position N is a forward use range. When the seat back 22 is positioned within the forward use range E21, the passenger is able to be seated on the seat 20. In addition, a range E22 defined in a rearward tilting direction of the neutral position N is a rearward use range. When the seat back 22 is positioned within the rearward use range E22, the passenger is also able to be seated on the seat 20. The forward use range E21 and the rearward use range E22 collectively define a usable range E2. When the seat back 22 is positioned within the usable range E2, it is defined that the seat 20 is in the usable position.

The seat back 22 may be tiltable rearward beyond a position Q, which is a most rearward tilting position of the rearward use range E22 (i.e., a most rearward usable position Q). According to the present embodiment, the seat back 22 is tiltable rearward to a position R (i.e., a most rearward tilting position R). In a case of expanding a space above the seat 20, for example, in order to place luggage on the seal 20 or so that the user of the vehicle lies on the seat 20 for having a break, the seat back 22 is tiltable rearward to the most rearward tilting position R. A range from the most rearward usable position Q to the most rearward tilting position R is a most rearward usable range E3. The most rearward usable range may be included in the usable position (usable state) of the seal 20. Specifically, in a case where the seat 20 is changes the usable position to the stored position, the most rearward usable range E3 in addition to the usable range E2 may be desirably included in the usable position (usable state) of the seat 20.

When the seat back 22 is most forwardly tilted and the support surface 22a of the seat back 22 makes contact with the seat cushion 23 to thereby fold the seat back 22 against the seat cushion 23, the seat back 22 is arranged in a most forward tilting position F. A storable range E1 is defined from a reference usable position P to the most forward tilting position F. The seat back 22 is connected to the seat cushion 23, a body of the seat 20, and the like by means of a lock mechanism. When the seat back 22 is tilted forward from the reference usable position P, the lock mechanism is released. The storable range E1 indicates a range where the seat 20 is storable because the lock mechanism is released. When the seat back 22 is positioned within the storable range E1, it is defined that the seat 20 is in the stored position. When the seat back 22 is in the most forward tilting position F, it is defined that the seat 20 is in the fully stored position.

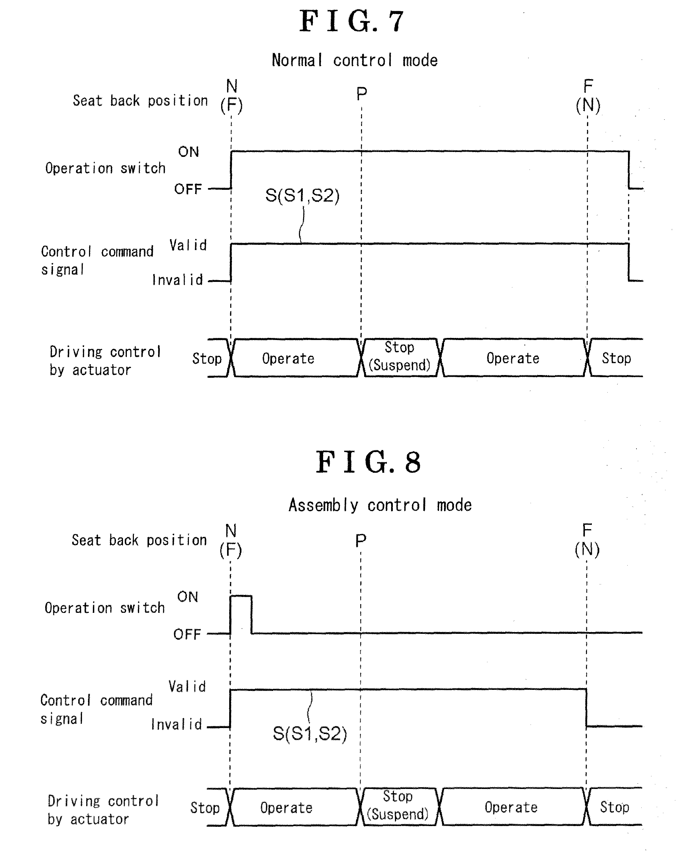

Fig. 7 is a timing chart of a control operation in a case where the operation of the actuator 4 is controlled to thereby change the seat position from the usable position to the stored position. The controlling portion 1 includes the normal control mode as illustrated in Fig. 7 and the assembly control mode as illustrated in Fig. 8. In the normal control mode, the operation of the actuator 4 is controlled on the basis of the control command for storing the seat 20 that is input via the normal input operation of the storing switch 31 by the user of the vehicle. In the assembly control mode, the operation of the actuator 4 is controlled on the basis of the control command for storing the seat 20 that is input via the assembly input operation of the storing switch 31 by the operator assembling the vehicle. The normal control mode is set as a default. The shifting from the normal control mode to the assembly control mode is achieved by a combination of the number of operations (operation times) relative to the switch circuit (input portion) 2, for example, several times of continuous one-push operations of the storing switch 31 within a predetermined time period. The shifting from the assembly control mode to the normal control mode is achieved in the same manner as the shifting from the normal control mode to the assembly control mode. After the shifting to the assembly control mode, the mode may be automatically returned to the normal control mode after an elapse of a predetermined time (for example, 30 minutes). A timing chart of a control operation in a case where the operation of the actuator 4 is controlled to thereby change the seat position from the stored position to the usable position is the same as the timing chart shown in each of Figs. 7 and 8. Positions of the seat back 22 when the seat position is changed from the stared position to the usable position are shown in brackets in Figs. 7 and 8.

The normal input operation of the storing switch 31 in the normal control mode is a continuous operation of the storing switch 31 for continuously pressing down the storing switch 31 by the user until the seat position is changed from the usable position to the stored position. That is, in the control operation in the normal control mode illustrated in Fig. 7, the storing command signal S1 generated on the basis of the control command for storing the seat 20 is valid while the user is continuously pressing down the storing switch 31. When the user stops pressing the storing switch 31, the storing command signal S1 is invalidated to be returned to an initial state. That is, the storing command signal S1 is the signal of the momentary operated switch. While the storing switch 31 is in an ON state by being pressed down, the valid storing command signal S1 is generated by the switch circuit 2. The controlling portion 1 drives the actuator 4 based on the valid storing command signal S1. The normal input operation of the return switch 32 in the normal control mode is also a continuous operation of the return switch 32 for continuously pressing down the return switch 32 by the user until the seat position is changed from the stored position to the usable position.

In a case where the storing switch 31 is continuously pressed down in the normal control mode, the driving of the actuator 4 is stopped once the seat back 22 reaches the reference usable position P. Then, when the valid storing command signal S1 is confirmed thereafter, the controlling portion 1 restarts driving the actuator 4. When the seat back 22 reaches the most forward tilting position F, the driving of the actuator 4 is stopped as mentioned above. At this time, when the storing switch 31 is continuously pressed down, the switch circuit 2 continuously outputs the valid storing command signal S1. The controlling portion 1 that receives the storing command signal S1 ignores the storing command signal S1 after the seat back 22 reaches the most forward tilting position F (i.e., in a fully stored state).

The assembly input operation of the storing switch 31 in the assembly control mode is performed so as to initiate the change of the seat position to the predetermined position and is a so-called one-push operation in which the operator assembling the vehicle brings the storing switch 31 to make contact once with the first contact point 3a. That is, in the assembly control mode illustrated in Fig. 8, the storing command signal S1 generated on the basis of the command signal for storing the seat 20 is validated by the different input operation from that of the normal control command relative to the switch circuit 2 by the user. Specifically, the storing command signal S1 is validated and the validation state is maintained by the one-push operation of the storing switch 31 in which the operator brings the storing switch 31 to make contact once with the first contact point 3a without having to continuously press down the storing switch 31. When the storing switch 31 is in the ON state by the one-push operation by the operator in the assembly control mode, the storing command signal S1, of which validity is continued, is generated by the switch circuit 2.

The controlling portion 1 controls the operation of the actuator 4 based on the valid storing command signal S1 in the assembly control mode. The controlling portion 1 once stops the driving of the actuator 4 when the seat back 22 reaches the reference usable position P. Then, the controlling portion 1 restarts driving the actuator 4 after the seat back 22 moves from the reference usable position P. The assembly input operation of the return switch 32 in the assembly control mode is also the one-push operation in which the operator brings the return switch 32 to make contact once with the second contact point 3b.

Accordingly, at a time of the vehicle assembly, the seat position is effectively changed from the usable position to the stored position or vice versa by the one-push operation in which the operator brings the storing switch 31 to make contact once with the first contact point 3a or brings the return switch 32 to make contact once with the second contact point 3b. That is, the operator assembling the vehicle effectively changes the seat position without the normal input operation for continuously pressing down the storing switch 31 or the return switch 32 as conducted by the user of the vehicle, and the operator is prevented from being constrained by operating (i.e., having to continuously press down) the switch in the same way as the user of the vehicle.

### [Second Embodiment]

In a case where the control command is input via the assembly input operation in the assembly control mode in the first embodiment, the actuator 4 may be driven at a higher speed than the speed in the normal control mode so that the position of the seat back 22 is changed to the predetermined position faster compared to the normal control mode. In this case, the assembly input operation and the normal input operation may be performed in the same manner.

### [Third Embodiment]

In the assembly input operation, the switch circuit 2 may receive the control command in which the predetermined position where the seat back 22 is desirably changed is specified in an arbitrary manner. That is, in the assembly control mode, the switch circuit 2 may receive the control command that is configured in such a manner that the seat back 22 is changed to a state where the seat back 22 is folded at an arbitrary angle within the storable range E1, a state where the seat back 22 is positioned at the arbitrary usable position within the usable range E2, the most rearward usable range E3, and the like.

### [Fourth Embodiment]

At least one of the shifting from the normal control mode to the assembly control mode and the shifting from the assembly control mode to the normal control mode may be achieved by at least one of a combination of the number of operation times and a combination of operation time periods relative to the switch circuit 2. For example, in the seat apparatus 10 of the first embodiment, the shifting to the vehicle assembly control mode or the normal control mode is achieved by the press-down operation of the storing switch 31 at predetermined time intervals over a predetermined number of times for a predetermined time period.

### [Fifth Embodiment]

At least one of the shifting from the normal control mode to the assembly control mode and the shifting from the assembly control mode to the normal control mode may be achieved by a combination of operations of the respective input operation members. For example, in the seat apparatus 10 of the first embodiment, the shifting to the assembly control mode or the normal control mode may be obtained by the combination of the one-push operation of the storing switch 31 and the one-push operation of the return switch 32 by using the storing switch 31 and the return switch 32 serving as the input operation members. In addition, the shifting to the assembly control mode or the normal control mode may be obtained by one of or more than one of operations of the storing switch 31, the return switch 32, a reclining switch, and a switch for using the seat (seat back) as a table, all serving as the input operation members.

### [Sixth Embodiment]

The shifting from the assembly control mode to the normal control mode may be performed automatically when an operation in the assembly control mode is completed. For example, in the seat apparatus 10 of the first embodiment, the operation in the assembly control mode is mostly performed while the vehicle is being assembled. The vehicle assembly operation may be often conducted by following predetermined processes. Thus, the completion of all the processes may be easily determined by a control history and the like. The automatic change to the normal control mode upon completion of the processes in the assembly control mode achieves an elimination of an input of the command to change to the normal control mode.

### [Other Embodiment]

Assembly control mode according to the seat apparatus of the aforementioned first to sixth embodiments is not limited to changing the seat position from a predetermined usable position to a predetermined stored position or changing the seat position from a predetermined stored position to a predetermined usable position. That is, the assembly control mode may achieve the change of the seat position from an arbitrary or predetermined usable position to another arbitrary or predetermined usable position or to an arbitrary or predetermined stored position. Alternatively, the assembly control mode may achieve the change of the seat position from an arbitrary or predetermined stored position to another arbitrary or predetermined stored position or to an arbitrary or predetermined usable position. Further, the seat apparatus according to the first to sixth embodiments may be configured in such a manner that once the control in the assembly control mode is performed, thereafter the shifting to the assembly control mode is prohibited.

## Claims

1. A seat apparatus for a vehicle (10), comprising:
a seat for a vehicle (20);
a seat driving portion (4) driving the seat (20) to change a seat position that is a position of the seat (20) relative to a vehicle body (A);
a controlling portion (1) controlling an operation of the seat driving portion (4) to change the seat position to a predetermined position; and
an input portion (2) receiving a control command relative to the controlling portion (1), wherein the controlling portion (1) includes an assembly control mode in which an operation of the seat driving portion (4) is controlled on a basis of the control command input to the input portion (2) by an assembly input operation performed when the vehicle is assembled and includes a normal control mode in which the operation of the seat driving portion (4) is controlled on a basis of the control command input to the input portion (2) by a normal input operation performed when the vehicle is used by a user.

2. The seat apparatus (10) according to claim 1, wherein the assembly input operation is an operation to initiate a change of the seat position and the normal input operation is a continuous operation continued until the seat position is changed to the predetermined position.

3. The seat apparatus (10) according to claim 1 or 2, wherein the predetermined position in the assembly control mode is specified in an arbitrary manner.

4. The seat apparatus (10) according to any one of claims 1 through 3, wherein at least one of a shifting from the normal control mode to the assembly control mode and a shifting from the assembly control mode to the normal control mode is achieved by at least one of a combination of the number of operation times and a combination of operation time periods relative to the input portion (2).

5. The seat apparatus (10) according to any one of claims 1 through 3, wherein the input portion (2) includes a plurality of input operation members (31, 32) corresponding to a plurality of control commands of which resulting seat positions are different from each other and at least one of a shifting from the normal control mode to the assembly control mode and a shifting from the assembly control mode to the normal control mode is achieved by a combination of operations of the respective input operation members (31, 32).

6. The seat apparatus (10) according to any one of claims 1 through 3, wherein a shifting from the assembly control mode to the normal control mode is automatically performed when an operation in the assembly control mode is completed.
